(19) **Europäisches Patentamt / European Patent Office / Office européen des brevets**

(11) **EP 2 694 302 B1**

(12) # FASCICULE DE BREVET EUROPEEN

(45) Date de publication et mention de la délivrance du brevet:
**13.05.2015 Bulletin 2015/20**

(21) Numéro de dépôt: **12709664.2**

(22) Date de dépôt: **22.03.2012**

(51) Int Cl.:
**B60C 11/03** *(2006.01)*    **B60C 11/04** *(2006.01)*

(86) Numéro de dépôt international:
**PCT/EP2012/055142**

(87) Numéro de publication internationale:
**WO 2012/130735 (04.10.2012 Gazette 2012/40)**

(54) **BANDE DE ROULEMENT COMPRENANT AU MOINS UNE RAINURE ONDULANTE ET PROCÉDÉ D'OBTENTION**

LAUFFLÄCHE MIT MINDESTENS EINER WELLENFÖRMIGEN NUT UND HERSTELLUNGSVERFAHREN DAFÜR

TREAD INCLUDING AT LEAST ONE WAVY GROOVE, AND METHOD FOR PRODUCING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2011 FR 1152828**

(43) Date de publication de la demande:
**12.02.2014 Bulletin 2014/07**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **AUDIGIER, Richard**
  **F-63040 CLERMONT-FERRAND Cedex9 (FR)**
- **ORAISON, Stéphane**
  **F-63040 CLERMONT-FERRAND Cedex9 (FR)**
- **BESSAC, Christophe**
  **F-63040 CLERMONT-FERRAND Cedex9 (FR)**

(74) Mandataire: **Diernaz, Christian**
  **M. F. P. Michelin,**
  **23, place des Carmes Dechaux,**
  **DGD/PI-F35-Ladoux**
  **63040 Clermont-Ferrand Cedex 09 (FR)**

(56) Documents cités:
**WO-A1-03/097384     WO-A2-02/38399**

EP 2 694 302 B1

**Description**

Domaine de l'invention

La présente invention concerne les bandes de roulement pour pneus équipant les véhicules poids lourd et plus particulièrement la sculpture de ces bandes de roulement.

*ÉTAT DE LA TECHNIQUE*

Un roulage par temps de pluie requiert une élimination la plus rapide possible de l'eau dans la région de contact de chaque pneu avec la chaussée afin d'assurer un contact entre le matériau constituant la bande de roulement et cette chaussée. Pour ce faire, il est formé sur la bande de roulement des rainures qui, par leurs dimensions (profondeur et largeur), restent ouvertes dans le contact avec la chaussée et permettent ainsi d'écouler de l'eau qui n'est pas repoussée sur l'avant et sur les côtés du pneu.

Les rainures peuvent avoir toute forme vue en section transversale et en trace sur la surface de roulement et être orientées selon une direction quelconque. Par trace d'une rainure sur la surface de roulement, on entend ici la ligne moyenne géométrique suivie par les arêtes formées par ladite rainure sur ladite surface.

Pour les pneus destinés aux essieux directeur ou porteur d'un véhicule poids lourd, il est usuel de pourvoir la bande de roulement de ces pneus avec des rainures longitudinales dont la profondeur est égale à ou sensiblement égale à l'épaisseur totale de la bande de roulement (sans compter l'épaisseur de bande de roulement éventuellement prévue pour permettre un renouvellement partiel des rainures par une opération de recreusage). Cette profondeur est en règle générale comprise entre 13 et 18 mm sur ces essieux. Pour les pneus destinés aux essieux moteurs la profondeur des rainures est supérieure et peut aller jusqu'à 24 mm. Par « épaisseur totale d'une bande de roulement », il faut ici entendre l'épaisseur totale de matière qui peut être usée avant de devoir changer un pneu ou de le rénover par rechapage.

Pour de tels pneus de l'état de la technique, le taux de creux volumique total est en règle générale compris entre 15 et 25% du volume de la bande de roulement destiné à être usé au cours du roulage. On constate que ces pneus ont un volume de creux disponible dans l'aire de contact qui est relativement important à l'état neuf ; ce volume de creux s'ouvrant sur la surface de roulement dans le contact est en moyenne de l'ordre de 100 cm$^3$ pour par exemple un pneu de dimension 315/70 R 22.5. Pour le pneu considéré, cette valeur est obtenue pour ses conditions nominales de pression de gonflage et de charge en statique telles que définies notamment par le standard ETRTO.

Par ailleurs pour améliorer l'adhérence du pneu sur la chaussée, il est connu de former des arêtes de gomme sur la surface de roulement. Pour former de telles arêtes, on réalise des incisions, c'est-à-dire des fentes minces ayant une largeur moyenne telle que, sous des conditions usuelles de sollicitation, les parois de matière délimitant chaque incision puissent venir, au moins partiellement, en contact l'une sur l'autre lors du passage dans la région de contact avec la route afin de limiter la perte de rigidité liée à la présence des incisions. Ces incisions peuvent être de profondeur égale à l'épaisseur de la bande à user ou inférieure à cette épaisseur.

Si des rainures ou plus généralement des cavités sont indispensables au drainage de l'eau, la diminution de surface de matière qui en résulte peut affecter sensiblement la performance en usure d'une bande et en conséquence réduire la durée d'utilisation du pneu résultant d'une augmentation de la vitesse d'usure. D'autres performances du pneu peuvent aussi être affectées et notamment les performances en comportement, en bruit en roulage, en résistance au roulement. Il est également observé que ces rainures formées pour avoir une profondeur utile égale à la hauteur de bande à user peuvent être la cause de problèmes d'endurance. Dans certaines conditions de roulage, des objets étrangers comme des cailloux peuvent être capturés dans ces rainures et venir agresser le fond de ces rainures et générer l'apparition de cassures dans le caoutchouc. Il a été par ailleurs observé que des manoeuvres impliquant des montées et descentes sur des obstacles divers pouvaient générer des cassures en fond de certaines rainures notamment celles situées près des bords latéraux de la bande de roulement.

Il est connu que la présence de rainures dans une bande de roulement génère une diminution des rigidités de compression et de cisaillement de cette bande puisque ces rainures délimitent des portions de matière plus déformables comparativement aux portions délimitées par des incisions dont les parois peuvent venir en contact l'une contre l'autre. Cette diminution de rigidité, dans le cas de la présence de rainures, induit une augmentation des déformations et génère une diminution de la performance en usure de la bande : on observe une usure plus importante pour une distance parcourue fixée (ceci correspond à une augmentation de la vitesse d'usure de la bande). Par ailleurs, on constate une augmentation de la résistance au roulement et donc de la consommation des véhicules équipés de tels pneus, résultant d'une augmentation des pertes hystérétiques liées aux cycles de déformations de la matière composant la bande de roulement.

Compte tenu de l'épaisseur nécessaire de leur bande de roulement, les pneus usuels pour véhicules poids lourd présentent, dans la région des bords de la bande de roulement, des températures de fonctionnement qui conditionnent le choix des matériaux de caoutchouc de la bande de roulement et notamment qui nécessitent l'emploi de compositions dont l'hystérèse est limitée.

Le document WO 03/097384 A1 divulgue un pneu pour véhicule poids lourd ayant une bande de roulement comprenant des rainures ouvertes sur la surface de roulement et des cavités sous-jacentes à la surface de roulement à l'état neuf, chacune de ces cavités ayant une génératrice supérieure selon un profil ondulé.

Définitions :

Par sculpture d'une bande de roulement, on entend dans la présente description la géométrie de la partie de la bande de roulement destinée à venir en contact avec une chaussée, cette sculpture étant formée par des éléments de reliefs délimités les uns des autres par des découpures (rainures, incisions, puits, cavités).

Le volume total d'une bande de roulement est égal au volume total de matière pouvant être usé en roulage avant de devoir retirer le pneu pour, soit renouveler sa bande de roulement par rechapage, soit le remplacer par un nouveau pneu.

Le volume total de creux (ou de cavité) d'une bande de roulement est égal à la somme de tous les volumes de creux s'ouvrant ou non sur la surface de roulement de la bande à l'état neuf. Par creux on entend des rainures, des puits ou tout type de cavités, lesdites cavités étant destinées à s'ouvrir dans la zone de contact avec la chaussée et à participer à un moment ou a un autre au drainage de la zone de contact.

Un bloc est un élément en relief formé sur la bande de roulement qui est délimité par des creux ou rainures et comprenant des parois latérales et une face de contact destinée à venir en contact avec la chaussée pendant le roulage.

Le plan médian équatorial est un plan perpendiculaire à l'axe de rotation du pneu et passant par les points du pneu radialement les plus éloignés dudit axe de rotation. Ce plan équatorial divise sensiblement le pneu en deux moitiés sensiblement égales.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est perpendiculaire à la fois à la direction axiale et à une direction radiale.

De façon usuelle, on utilise indifféremment dans le présent texte les termes « élastomère » et « caoutchouc » qui sont interchangeables.

*BREF EXPOSÉ DE L'INVENTION*

La présente invention vise à proposer une bande de roulement de pneu destiné à équiper un véhicule poids lourd qui - par la mise en oeuvre d'un type de sculpture permette d'améliorer significativement et à la fois pour cette bande : la performance en usure, la performance en résistance au roulement, la performance en adhérence sur chaussée mouillée, la résistance aux agressions mécaniques notamment sur les fonds de rainures proches des bords latéraux.

À cet effet, l'invention a pour objet un pneu pour véhicule poids lourd comprenant une bande de roulement d'épaisseur totale E et de volume total V, cette bande de roulement ayant une surface de roulement destinée à venir en contact avec une chaussée et ayant en outre :

**[0022]** - au moins une cavité ou rainure continue selon une direction principale, cette cavité ou rainure étant délimitée par des parois latérales reliées par un fond, cette cavité ou rainure ayant une section transversale, les points les plus à l'intérieur du fond de chaque cavité définissant une ligne de fond,

**[0023]** - chaque cavité ou rainure comprend une pluralité de tronçons ouverts sur la surface de roulement à l'état neuf et une pluralité de tronçons fermés, les tronçons fermés reliés aux tronçons ouverts étant disposés en alternance (c'est-à-dire qu'un tronçon ouvert est encadré par deux tronçons fermés), chaque tronçon fermé étant espacé de la surface de roulement par un pont de gomme,

cette bande de roulement étant caractérisée en ce que :

**[0024]** - les points de la ligne de fond de ladite cavité ou rainure sont situés entre une distance minimale Dm et une distance maximale DM, ces distances - mesurées sur la bande de roulement à l'état neuf par rapport à la surface de roulement, étant au plus égales à l'épaisseur E de la bande de roulement,

**[0025]** - la ligne de fond de chaque cavité ou rainure suit une géométrie ondulante d'amplitude positive égale à la différence (DM-Dm) et selon une longueur d'onde inférieure à la longueur moyenne d'empreinte mesurée aux conditions d'utilisation telles que définies par la norme E.T.R.T.O. pour le pneu,

**[0026]** - le pont de gomme - formé entre chaque tronçon fermé et la surface de roulement, est continu.

Préférentiellement, la distance minimale Dm de la ligne de fond des rainures ondulantes et la surface de roulement est au moins égale à 25% de l'épaisseur E de la bande de roulement.

Le terme « ondulant » peut être interprété dans la présente description comme signifiant zigzagant ou encore oscillant entre deux niveaux, un niveau minimum (à une distance Dm de la surface de roulement) et un niveau maximum (à une distance DM de la même surface de roulement).

Les conditions d'utilisation E.T.R.T.O. précisent la pression de gonflage de référence correspondant à la capacité de charge du pneu indiquée par son indice de charge et son code vitesse. L'empreinte de contact avec la chaussée est réalisée avec le pneu en statique, à partir de laquelle on calcule une valeur moyenne de longueur d'empreinte.

L'expression « situés entre une distance minimale Dm et une distance maximale DM » doit être comprise ici comme indiquant que des points d'un fond d'une cavité sont situés à une distance égale à la distance minimale Dm et d'autres points du même fond sont situés à une distance égale à la distance maximale DM, d'autres points du même fond étant situés à des distances supérieures à la distance minimale Dm et d'autres points à des distances inférieures à la distance maximale DM par rapport à la surface de roulement.

L'expression « géométrie ondulante d'amplitude égale à la différence (DM-Dm) et dont la longueur d'onde moyenne est inférieure à la longueur moyenne d'empreinte mesurée aux conditions d'utilisation telles que définies par la norme E.T.R.T.O. pour le pneu doit être interprétée comme indiquant que la cavité est formée d'une pluralité de tronçons de cavité, certains tronçons, dits « ouverts », étant - au moins quand la bande de roulement est neuve, ouverts sur la surface de roulement tandis que d'autres tronçons, dits « fermés », sont entièrement situés sous la surface de roulement lorsque la bande de roulement est neuve et donc non usée. Les tronçons ouverts et fermés sont disposés en alternance. Les tronçons fermés sont destinés à ne s'ouvrir sur la surface de roulement qu'après une usure partielle de la bande de roulement. De cette façon, on forme une sorte de rainure dont la géométrie ondulante fait que par endroits cette rainure s'ouvre sur la surface de roulement à l'état neuf de la bande et qu'entre ces endroits d'ouverture, ladite rainure forme un canal dans la bande (ceci est équivalent à dire que cette cavité continue est ouverte sur la surface de roulement de façon discontinue).

Chaque cavité ou rainure continue et ondulante dans l'épaisseur de la bande a une section transversale moyenne, la surface de cette section pouvant être constante ou varier autour d'une valeur moyenne afin d'assurer l'écoulement de fluide dans ladite rainure.

Grâce à une bande de roulement selon l'invention, il est créé un pont de gomme continu s'étendant radialement au dessus de chaque tronçon fermé de chaque rainure ondulante ce qui est particulièrement efficace pour augmenter la résistance aux déformations résultant de chocs sur les bords latéraux de la bande de roulement ou de passage sur des obstacles au moins lorsque la bande est neuve. Par pont de gomme continu, il faut comprendre que le matériau situé radialement à l'extérieur de chaque tronçon fermé est dépourvu de toute incision ou rainure de même orientation que la direction principale de la cavité.

Une cavité selon l'invention peut être formée dans une direction principale qui est la direction circonférentielle sur le pneu, et dans ce cas-là, ladite cavité fait le tour complet du pneu ou encore dans une direction oblique voire transversale. Bien entendu, une combinaison de diverses orientations sur une même bande de roulement est possible comme il est possible de prévoir la formation de cavités à des profondeurs variées dans la bande.

L'invention concerne également un mode d'obtention d'une bande de roulement pour pneu, cette bande comprenant au moins une cavité ou rainure ondulante continue, ce mode d'obtention comprenant les étapes suivantes :

- préparation d'une bande de gomme non vulcanisée,

- incorporation dans cette bande de gomme d'au moins un insert suivant une géométrie ondulante,

- moulage et vulcanisation de la bande,

- enlèvement au moins partiel de chaque insert pour former au moins une cavité ou rainure ondulante continue.

Préférentiellement, la ligne de fond de la cavité comprenant un insert suit une géométrie ondulante ayant une longueur d'onde inférieure à la longueur moyenne d'empreinte mesurée aux conditions d'utilisation telles que définies par la norme E.T.R.T.O. pour le pneu neuf.

Un moyen de réalisation d'une telle bande de roulement consiste à intégrer dans une bande non vulcanisée un insert, cet insert correspondant aux caractéristiques dimensionnelles de la cavité continue ondulante que l'on souhaite obtenir. L'insert est disposé dans la bande non vulcanisée selon une géométrie ondulante à partir de la surface externe de la bande à l'état neuf ou à tout le moins au voisinage de cette surface externe. Cette opération peut être réalisée par une opération de co-extrusion à l'aide d'une extrudeuse comportant une tête principale d'extrusion à l'intérieur de laquelle est disposée au moins une tête secondaire d'extrusion de l'insert, cette dernière tête étant dotée de moyens pour la déplacer selon la direction de l'ondulation recherchée pour la cavité.

Cette opération de co-extrusion peut être mise en oeuvre à l'aide d'une machine de réalisation - d'une bande de roulement pour un pneumatique de véhicule, telle que décrite dans une demande de brevet déposée en 2010 mais non publiée à la date de dépôt de la présente demande.

Selon cette précédente demande de brevet, la machine comprend :

- des moyens pour extruder une bande de gomme non vulcanisée ;

- des moyens pour former au moins un sillon dans cette bande selon une géométrie ondulante au moins dans la profondeur de la bande;

- des moyens de réception d'une bobine de jonc pour former l'insert ; et

- des moyens pour insérer dans le ou chaque sillon un jonc provenant de la bobine.

Bien entendu, cet insert doit être réalisé dans un matériau apte à être enlevé de la bande après vulcanisation pour révéler une cavité continue et ondulante. On peut ainsi employer un matériau résistant à la traction pour pouvoir être retiré par traction après cuisson et avant la mise en exploitation du pneu.

Un autre moyen consiste à employer, pour former l'insert, un matériau qui soit apte à être éliminé par dissolution au contact de l'eau dès lors qu'il apparaît au moins en partie sur la surface de roulement. Après moulage et vulcanisation, on peut introduire de l'eau au voisinage de chaque insert jusqu'à une totale dissolution dudit insert. Ceci peut se produire après une usure partielle mettant l'insert en contact avec la surface de roulement.

Une autre possibilité consiste à former l'insert dans un matériau pulvérulent qui, par son absence de cohésion, peut s'éliminer par le seul effet des forces centrifuges dès que le pneu est mis en rotation.

Une autre possibilité consiste à utiliser un matériau non vulcanisable (matériau saturé, ne comprenant pas de double liaison) qui peut être retiré après moulage pour former une rainure continue.

L'insert employé pour former une rainure ondulante peut avantageusement être, au préalable, coupé à des longueurs inférieures à la longueur totale de la bande. Cette disposition facilite par la suite l'extraction de l'insert de la bande après moulage.

Bien entendu, une combinaison de ces divers moyens est possible en fonction de la section de cavité, de l'amplitude de son ondulation et de sa longueur d'onde moyenne. Une fois moulée et vulcanisée, la bande de roulement peut, si nécessaire - c'est-à-dire si le ou les inserts n'apparaissent pas sur la surface de roulement de la bande, faire l'objet d'un léger meulage pour révéler les tronçons ouverts de la cavité sur la surface de roulement. Pour permettre une meilleure visibilité de l'insert, il est possible de le prévoir coloré d'une couleur différente de celle de la bande de roulement.

Dans une autre variante également intéressante, on peut introduire dans une bande de roulement un insert sous la forme d'un tube creux qui après moulage et vulcanisation délimite dans son intérieur une cavité continue. Ce tube creux peut être réalisé en matériau caoutchoutique à base d'au moins un élastomère, ce matériau caoutchoutique pouvant ou non être identique à celui de la bande de roulement elle-même, ce matériau étant par ailleurs prévu pour rester en place après usure partielle mettant à jour l'insert. Pour assurer un moulage d'une cavité, il peut être judicieux de prévoir un moyen pour maintenir pendant le moulage une pression à l'intérieur du tube (soit par remplissage avec un liquide qui peut s'éliminer après moulage, soit par remplissage avec un gaz sous pression).

Dans un autre mode de réalisation, ce tube peut être réalisé dans un matériau différent de celui de la bande de roulement. Par exemple, ce matériau peut avoir une résistance à la déchirure augmentée par rapport à la même performance du matériau constituant la bande de roulement. Des matériaux plastiques peuvent être employés à cet effet.

Préférentiellement, le volume total de creux est au moins égal à 7% et au plus égal à 12% d'un volume égal à la somme du volume total V de la bande de roulement et du volume total de creux.

Préférentiellement cette bande de roulement comprend un volume de creux efficace Ve pour chaque couche d'usure, ce volume de creux efficace contribuant à drainer la région de contact de la bande de roulement avec une chaussée et satisfaisant la relation suivante :

$$\text{[060]} \quad 0.4 \, Se < Ve < 0.8 \, Se,$$

dans laquelle, 0.4 et 0.8 sont des hauteurs exprimées en millimètres (mm) et Se est la surface (en mm$^2$) délimitée par le contour externe de l'empreinte de contact de la bande de roulement avec un sol mesurée en statique dans les conditions d'utilisation (pression et charge) telles que définies par la norme E.T.R.T.O. pour le pneu concerné.

Par volume de creux efficace Ve pour chaque couche d'usure, on entend ici un volume de creux formé dans la bande de roulement pour servir à drainer la région de contact de la bande de roulement, ce volume de creux efficace étant déterminé lorsque le pneu est soumis à des conditions usuelles d'usage.

Par couche d'usure, on entend, dans la présente demande, une partie de la bande de roulement liée à la profondeur maximale des rainures dans ladite couche d'usure. Une couche d'usure a une épaisseur qui est inférieure à l'épaisseur totale de la bande de roulement et qui est égale à la profondeur maximale des rainures ou cavités présentes dans cette couche d'usure. Les bandes de roulement de l'invention comprennent au moins deux couches d'usure dont certaines des rainures ou cavités ne sont formées que dans une desdites couches. Il est bien sûr possible et même avantageux que dans cette configuration, chaque couche d'usure devienne active avant qu'une précédente couche d'usure soit totalement usée ; dans un tel cas on a un recouvrement entre au moins deux couches d'usure. Une couche d'usure devient active dès lors que les cavités ou rainures formées dans cette couche s'ouvrent sur la surface de roulement du pneu en contact avec la chaussée pour drainer l'eau présente sur ladite chaussée par temps de pluie. La première couche d'usure correspond à la partie de la bande de roulement radialement le plus à l'extérieur à l'état neuf.

Les hauteurs de 0.4 mm et 0.8 mm correspondent à des hauteurs moyenne d'eau qui peuvent être présentes sur une chaussée par temps de pluie et qu'il faut pouvoir drainer ou capter pour maintenir un bon contact entre la bande de roulement et la chaussée. Ces hauteurs moyennes multipliées par la surface Se - surface déterminée par le contour de l'empreinte de contact de la bande de roulement sur la même chaussée et exprimée en $mm^2$ (les surfaces correspondant aux cavités s'ouvrant sur la surface de roulement de la bande sont ici prises en compte) - sont à même de fournir une indication du volume de cavité efficace Ve lorsque le pneu est soumis à ses conditions nominales d'usage (pression interne de gonflage et charge portée. Si ce volume Ve est inférieur à 0.4 fois Se, il n'est pas suffisant pour obtenir un drainage satisfaisant, et il reste alors de l'eau à l'interface entre le pneu et la chaussée. Si ce volume Ve est supérieur à 0.8 fois Se alors ce volume est jugé surabondant d'un point de vue de l'obtention d'une rigidité appropriée de la bande.

Selon une variante préférentielle de la présente invention, la bande de roulement comprend au moins une rainure continue et ondulante dans la direction circonférentielle et comprenant une pluralité de tronçons ouverts sur la surface de roulement à l'état neuf et une pluralité de tronçons fermés situées radialement et en totalité à l'intérieur de la bande à l'état neuf, de manière à former une sorte de première couche d'usure jusqu'aux points radialement les plus à l'intérieur des tronçons ouverts. Après cette première couche d'usure, d'autres couches d'usure s'étendent dans la profondeur de la bande jusqu'aux points les plus à l'intérieur des cavités internes de la couche d'usure considérée, les tronçons ouverts ayant une profondeur moyenne au plus égale à 75 % de l'épaisseur de la bande de roulement, les tronçons fermés ayant une hauteur moyenne au plus égale à 75 % de l'épaisseur de la bande de roulement.

Selon une variante préférentielle, la distance minimale Dm de la ligne de fond d'une rainure ondulante est au moins égale à 25% de l'épaisseur de la bande.

Selon une autre variante préférentielle de l'invention, chaque rainure ondulante a une section transversale de surface constante ou sensiblement constante (c'est-à-dire dont les variations sont au plus égales à 10%).

Selon une autre variante intéressante de pneu de l'invention, toutes les couches d'usure de la bande de roulement ont la même composition.

D'autres caractéristiques et avantages de l'invention ressortent de la description faite ci-après en référence aux dessins annexés qui montrent, à titre d'exemple non limitatif, une forme de réalisation de l'objet de l'invention.

*BRÈVE DESCRIPTION DES FIGURES*

Les figures 1 à 5 montrent les étapes de réalisation d'une bande de roulement selon l'invention ;

la figure 6 montre une bande de roulement après moulage et enlèvement de l'insert moulant une rainure ondulante selon l'invention ;

la figure 7 montre une variante de rainure ondulante selon l'invention ;

la figure 8 montre une variante d'une bande de roulement d'un pneu selon l'invention ;

la figure 9 montre une variante d'une bande de roulement d'un pneu selon l'invention ;

la figure 10 montre une sculpture selon l'art antérieur.

*DESCRIPTION DES FIGURES*

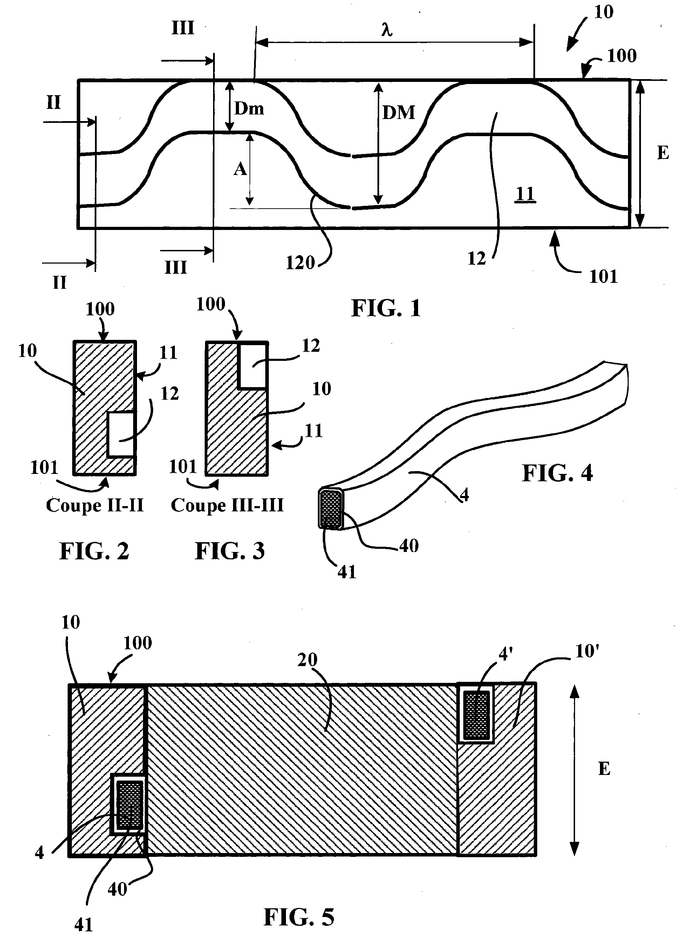

Les figures 1 à 5 montrent les étapes de réalisation d'une bande de roulement selon l'invention.
La figure 1 montre une surface latérale 11 d'une bande de gomme 10 non vulcanisée ayant une surface externe 100 destinée à devenir une partie d'une surface de roulement d'une bande de roulement après vulcanisation et moulage et une surface interne 101 destinée à être placée sur une ébauche de pneu. Cette bande de gomme a - mesurée entre les surfaces externe 100 et interne 101, une hauteur E correspondant à l'épaisseur de la bande de roulement. Sur la surface latérale 11 de cette bande de gomme 10 est réalisée une rainure 12 de tracé ondulant dans la hauteur E de la bande. Cette rainure 12 a des dimensions appropriées pour recevoir un insert 4 tel que montré en exemple avec la figure 4.

Cette rainure 12 a une forme ondulante et est continue dans la direction principale de la bande de gomme. Cette rainure 12 comprend une ligne de fond 120 (ligne reliant les points du fond les plus à l'intérieur) qui ondule entre une distance minimale Dm et une distance maximale DM, ces deux distances étant mesurées par rapport à la surface externe 100. La rainure 12 affleure la surface externe 100 mais elle pourrait être située à une distance non nulle en décalage par rapport à cette surface externe 100 de manière à former une cavité remplie par un insert.

Cette rainure 12 a une amplitude A égale à la différence DM-Dm qui est inférieure à l'épaisseur E de la bande tandis que la longueur d'onde λ de l'ondulation de cette rainure est choisie pour être inférieure à la longueur moyenne d'empreinte d'un pneu pour lequel est fabriquée une bande de roulement avec cette bande de gomme.

Les figures 2 et 3 montrent des coupes de la bande de gomme 10 selon des plans de coupe repérés par les lignes II-II et III-III respectivement sur la figure 1.

La figure 4 montre un insert 4 destiné à être mis en place dans la rainure ondulante 12. Cet insert 4 est formé par une peau 40 en caoutchouc enveloppant un coeur 41 réalisé en matériau pulvérulent.

La figure 5 montre l'assemblage de trois bandes de gomme : une première bande de gomme 10 pourvue avec un insert 4, une deuxième bande de gomme 20 dépourvue d'insert et une troisième bande de gomme 10' pourvue avec un insert 4'. Cette troisième bande de gomme 10' est formée d'une façon semblable à la bande de gomme 10, la rainure formée sur cette bande de gomme 10' étant décalée dans la direction longitudinale (correspondant à une direction perpendiculaire au plan de la figure) par rapport à la rainure formée sur la première bande de gomme 10.

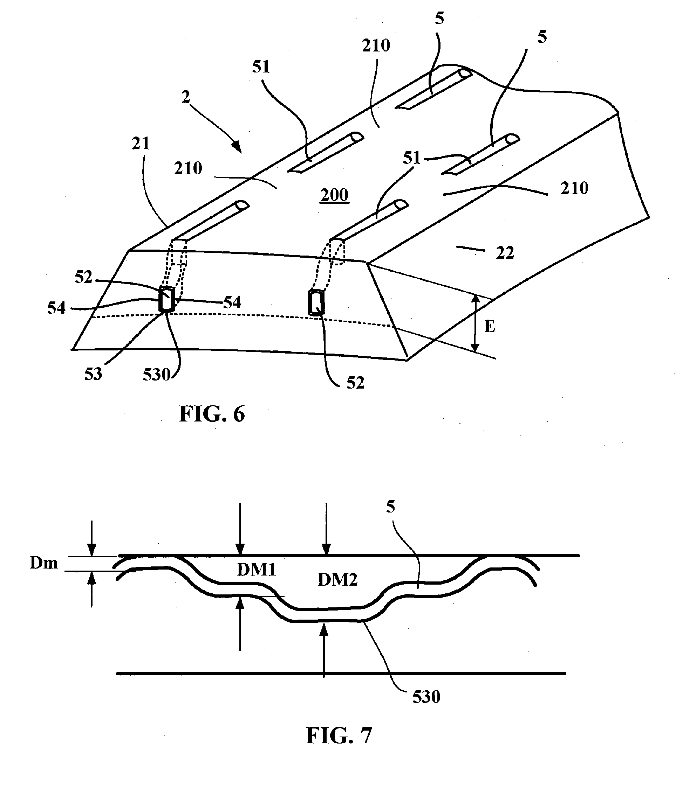

La figure 6 montre une bande de roulement 2 après moulage et enlèvement des inserts moulant chacun une rainure ondulante 5 selon l'invention. Après vulcanisation et moulage de l'empilement des bandes de gomme tel que montré avec la figure 5, il est aisé de procéder par un léger meulage de la surface externe destinée à devenir la surface de roulement 200 de la bande de roulement 2 pour révéler les inserts et permettre alors leur enlèvement afin de former les rainures ondulantes continues 5. Ces rainures ondulantes 5 formées près des bords latéraux 21, 22 de la bande de roulement sont formées d'une succession de tronçons ouverts 51 sur la surface de roulement reliés entre eux par des tronçons fermés 52 passant dans l'épaisseur de la bande. Entre la surface de roulement 200 et ces tronçons fermés 52, la présence de ponts de gomme 210 assure une excellente résistance mécanique aux chocs et sollicitations s'exerçant sur les bords latéraux de la bande. On observe dans cet exemple que la peau 40 de chaque insert 4 (tel que montré à la figure 4) est maintenue en place dans la rainure et permet par la mise en oeuvre d'un matériau approprié d'augmenter encore la résistance à la fissuration éventuelle. Cette peau forme les parois latérales 54 et le fond 53 des rainures ondulantes 5.

Dans le cas présent, les longueurs des tronçons ouverts 51 sont supérieures aux longueurs des tronçons fermés 52 et les sections transversales sont sensiblement identiques pour chacun des tronçons ouverts et fermés afin d'assurer une circulation optimale des fluides et en particulier des liquides à l'état neuf.

On obtient ainsi un pneu pour véhicule poids lourd comprenant une bande de roulement 2 d'épaisseur totale E et de volume total V, cette bande de roulement ayant une surface de roulement 200 destinée à venir en contact avec une chaussée, cette bande de roulement ayant :

**[0069]** - au moins une cavité ou rainure 5 continue selon une direction principale, cette cavité ou rainure 5 étant délimitée par des parois latérales 54 reliées par un fond 53, cette cavité ou rainure ayant une section transversale, les points les plus à l'intérieur du fond 53 de chaque cavité définissant une ligne de fond 530,

**[0070]** - chaque cavité ou rainure comprend une pluralité de tronçons ouverts 51 sur la surface de roulement à l'état neuf et une pluralité de tronçons fermés 52, les tronçons fermés reliés aux tronçons ouverts étant disposés en alternance, chaque tronçon fermé étant espacé de la surface de roulement par un pont de gomme, et cette bande de roulement étant telle que :

**[0071]** - les points de la ligne de fond 530 de ladite cavité ou rainure sont situés entre une distance minimale Dm et une distance maximale DM, ces distances - mesurées sur la bande de roulement à l'état neuf par rapport à la surface de roulement, étant au plus égales à l'épaisseur E de la bande de roulement,

**[0072]** - la ligne de fond 530 de chaque cavité ou rainure suit une géométrie ondulante d'amplitude positive égale à la différence (DM-Dm) et selon une longueur d'onde inférieure à la longueur moyenne d'empreinte mesurée aux conditions d'utilisation telles que définies par la norme E.T.R.T.O. pour le pneu,

**[0073]** - le pont de gomme 210 formé entre chaque tronçon fermé 52 et la surface de roulement 200 est continu, c'est-à-dire dépourvu de toute entaille reliant la surface de roulement au tronçon fermé.

La figure 7 montre une variante de rainure ondulante 5 selon l'invention. Selon cette variante la rainure ondulante 5 présente plusieurs niveaux successifs, la ligne de fond 530 ondulant entre une position située à une distance Dm de la surface de roulement, une première position située à une distance DM1 et une deuxième position située à une distance DM2, cette dernière étant supérieure à la distance DM1. L'amplitude A totale de la rainure est dans ce cas égale à la différence DM2-Dm. La longueur d'onde λ de cette ondulation - égale à la distance entre deux tronçons ouverts consécutifs sur la surface de roulement, est choisie pour être inférieure à la longueur moyenne de l'empreinte de contact du pneu avec une chaussée en roulage aux conditions d'usage de façon à avoir au moins en partie deux tronçons ouverts pour chaque rainure ondulante dans le contact avec une chaussée. Chaque niveau définit une couche d'usure de la bande.

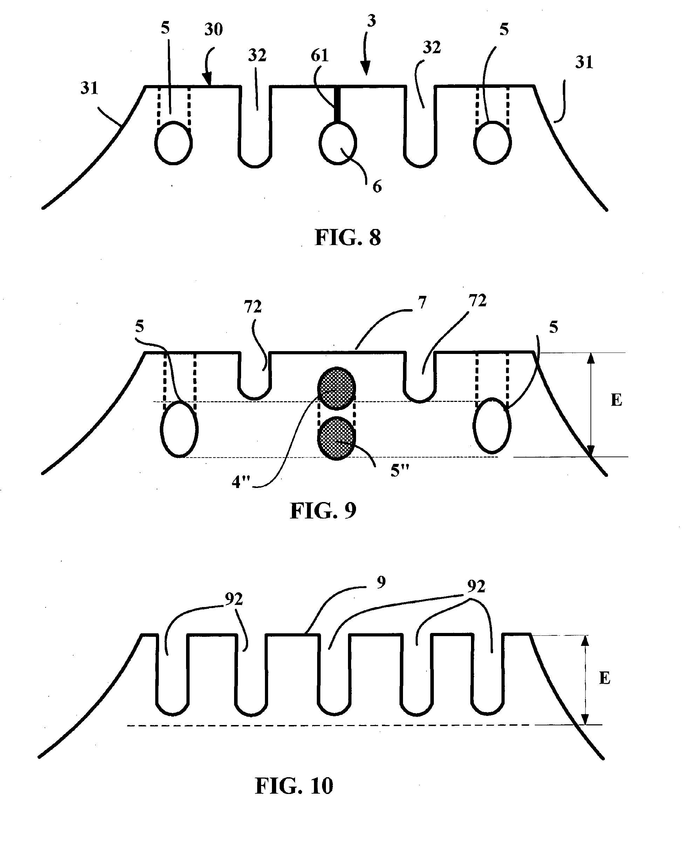

La figure 8 montre une variante d'une bande de roulement 3 d'un pneu selon l'invention, cette bande ayant été obtenue selon le procédé qui vient d'être décrit avec le support des figures 1 à 5. La bande de roulement 3 qui est montrée en coupe transversale (c'est-à-dire réalisée dans un plan de coupe contenant l'axe de rotation du pneu) comprend une surface de roulement 30 destinée à venir en contact avec une chaussée lors du roulage, cette surface de roulement étant limitée transversalement par des parois latérales 31. Cette bande 3 comprend deux rainures 32 de profondeur égale à l'épaisseur de la bande, ces deux rainures 32 encadrant une incision 61 se prolongeant par un canal 6 destiné à former une nouvelle rainure après usure partielle sensiblement égale à la moitié de l'épaisseur de la bande. Le canal 6 s'étend à une profondeur maximale égale à celle des rainures 32.

En outre, axialement vers l'extérieur de chaque rainure 32, la bande comprend une rainure ondulante continue 5 dans la direction circonférentielle (ou longitudinale), chaque rainure ondulante comprenant une pluralité de tronçons ouverts sur la surface de roulement et de tronçons fermés semblables à ceux décrits avec les figures 1 à 5. Ainsi, il est possible de renforcer les parties latérales de bord de la bande de roulement tout en bénéficiant de rainures de drainage. Après usure partielle, ces rainures ondulantes 5 forment des cavités disjointes les unes des autres et l'ouverture du canal 6 sur la surface de roulement permet de redonner un potentiel de drainage à la bande de roulement.

La figure 9 montre une variante d'une bande de roulement 7 d'un pneu selon l'invention assez proche de la variante montrée avec la figure 8. Dans le cas présent, on forme des rainures 72 ayant une profondeur inférieure à l'épaisseur de la bande de roulement (c'est-à-dire inférieure à l'épaisseur qui peut être usée avant d'atteindre la limite légale d'usure de la bande).

Sur les bords, c'est-à-dire axialement à l'extérieur de chaque rainure 72, on forme une rainure ondulante et continue 5 comportant une pluralité de tronçons ouverts sur la surface de roulement de la bande à l'état neuf. La profondeur maximale de ces rainures ondulantes (DM) est égale à l'épaisseur de la bande de roulement.

En partie centrale de cette bande 7, on forme une cavité continue 5" ondulant dans la profondeur de la bande et remplie lors de la fabrication avec un insert 4". Cet insert est destiné à être éliminé pour former une nouvelle rainure ondulante et continue lorsque l'usure de la bande atteint ledit insert (dans une variante de réalisation, l'insert peut être un tube rempli avec un matériau pulvérulent qui s'élimine par rotation du pneu. Préférentiellement, cet insert apparaît avant que les tronçons ouverts des rainures continues et ondulantes 5 formées sur les parties de bord de la bande n'aient totalement disparu par usure.

Tous les exemples décrits mettent en oeuvre une seule composition de caoutchouc, mais il est entendu ici que la composition peut être adaptée à chaque niveau d'usure. De même, les bandes de roulement présentées de manière simplifiée peuvent comprendre en outre des rainures transversales, ces mêmes rainures transversales pouvant être d'une profondeur égale à l'épaisseur de la bande ou encore de nature ondulante à l'image des rainures ondulantes et orientées dans la direction circonférentielle.

Bien entendu, l'invention n'est pas limitée aux exemples décrits et représentés et diverses modifications peuvent y être apportées sans sortir du cadre défini par les revendications. En particulier si toute la présente description s'est attachée à décrire l'application à un pneu destiné à équiper un véhicule poids lourd, il doit être compris qu'une bande de roulement comprenant une sculpture et une composition telles que définies ici fait également partie de l'invention puisqu'une telle bande de roulement est destinée à être intégrée à un pneu (soit à la fabrication soit lors du rechapage dudit pneu). Par ailleurs, la formation d'une cavité ondulante dans l'épaisseur de la bande de roulement peut être accompagnée d'une ondulation dans une direction dans la direction de la largeur de cette même bande.

Les exemples décrits montrent deux couches d'usure ; on peut bien sûr prévoir un nombre supérieur de couches d'usure, une même rainure pouvant traverser ces couches d'usure.

La figure 10 montre une vue en plan d'une bande de roulement 9 selon l'art antérieur correspondant à une dimension de pneu 315/70 R 22.5. Les conditions d'utilisation telles que définies par la norme E.T.R.T.O. pour cette dimension de pneu utilisé en monte simple sont : pression de gonflage 9.00 bars, charge par pneu 3750 kg.

Pour le pneu considéré, cette bande de roulement 9 comprend cinq rainures 92 longitudinales dont la profondeur, égale à l'épaisseur E de la bande de roulement soit 15 mm, cette épaisseur correspondant à l'épaisseur de matière destinée à être usée en roulage. Cette bande comprend en outre des rainures d'orientation transversale.

À l'état initial correspondant à la bande de roulement à l'état neuf non usé, la bande a un volume total de creux mesuré dans les conditions de pression de gonflage et de charge indiquées, disponible dans le contact avec une chaussée, qui est important et égal dans le cas présent à 100 cm$^3$. Ce volume est mesuré dans les conditions d'utilisation telles que définies plus haut en statique.

Dans le cas présent, il n'y a qu'une couche d'usure puisque le volume total de creux formé par les rainures longitudinales est ouvert en totalité sur la surface de roulement à l'état initial (pneu neuf) et ce volume de creux diminue à mesure que s'use la bande de roulement.

Cette bande a un volume de creux total égal à 19% du volume total de la bande prévu pour être usé.

Toutes les rainures ont des profondeurs égales à l'épaisseur de la bande de roulement.

Le volume de creux efficace Ve de cette bande est supérieur au volume obtenu en multipliant une hauteur égale à 1 mm par la surface St (en mm$^2$) correspondant à la surface délimitée par le contour externe de l'empreinte de contact de la bande de roulement mesurée en statique dans les conditions nominales de charge et de pression.

Pour cette bande, le volume de creux efficace Ve pour drainer l'eau dans le contact avec une chaussée dans la couche d'usure unique est égal à 100% du volume de creux total Vt de la bande de roulement, puisque tous les creux s'ouvrent sur la surface de roulement du pneu neuf.

On constate que cette structure traditionnelle des sculptures de bande de roulement nécessaire à l'obtention d'un drainage satisfaisant à neuf et jusqu'à la limite d'usure de la bande, impose un taux de creux en volume qui est à l'état initial (bande de roulement neuve) très important ce qui se traduit par un abaissement des rigidités (de compression, de cisaillement) qui ne peut être que partiellement compensé que par la mise en oeuvre de matériaux appropriés.

Grâce à l'invention décrite ici et notamment la présence d'un plus grand volume de matière pour une même épaisseur permet de rigidifier les bandes de roulement et ainsi d'obtenir une résistance accrue notamment aux chocs contre les bords latéraux de ces bandes.

**Revendications**

1. Pneu pour véhicule poids lourd comprenant une bande de roulement (2) d'épaisseur totale E et de volume total V, cette bande de roulement ayant une surface de roulement (200) destinée à venir en contact avec une chaussée, cette bande de roulement ayant :

   - au moins une cavité ou rainure (5) continue selon une direction principale, cette cavité ou rainure (5) étant délimitée par des parois latérales (54) reliées par un fond (53), cette cavité ou rainure ayant une section transversale, les points les plus à l'intérieur du fond (53) de chaque cavité définissant une ligne de fond (530),
   - les points de la ligne de fond (530) de ladite cavité ou rainure étant situés entre une distance minimale Dm et une distance maximale DM, ces distances - mesurées sur la bande de roulement à l'état neuf par rapport à la surface de roulement, étant au plus égales à l'épaisseur E de la bande de roulement,
   - la ligne de fond (530) de chaque cavité ou rainure suivant une géométrie ondulante d'amplitude positive (A) égale à la différence (DM-Dm) et selon une longueur d'onde (λ) inférieure à la longueur moyenne d'empreinte mesurée aux conditions d'utilisation telles que définies par la norme E.T.R.T.O. pour le pneu neuf,

   cette bande de roulement étant **caractérisée en ce que** :

   - chaque cavité ou rainure comprend une pluralité de tronçons ouverts (51) sur la surface de roulement à l'état neuf et une pluralité de tronçons fermés (52), les tronçons fermés reliés aux tronçons ouverts étant disposés en alternance, chaque tronçon fermé étant espacé de la surface deroulement par un pont de gomme,
   - le pont de gomme formé entre chaque tronçon fermé (52) et la surface de roulement (200) est continu.

2. Pneu selon la revendication 1 **caractérisé en ce que** la distance minimale Dm de la ligne de fond (530) des rainures ondulantes et la surface de roulement est au moins égale à 25% de l'épaisseur E de la bande de roulement.

3. Pneu selon l'une quelconque des revendications 1 ou 2 **caractérisé en ce que** sa bande de roulement comprend au moins un insert (4, 4', 4") destiné à former une cavité continue selon une direction principale, cette cavité étant délimitée par des parois latérales reliées par un fond, les points les plus à l'intérieur du fond de cette cavité définissant une ligne de fond de forme ondulante, cet insert (4, 4', 4") étant disposé dans la bande de manière à apparaître sur la surface de roulement de la bande qu'après une usure partielle de la bande.

4. Pneu selon la revendication 3 **caractérisé en ce que** la ligne de fond de la cavité comprenant un insert (4, 4', 4") suit une géométrie ondulante ayant une longueur d'onde inférieure à la longueur moyenne d'empreinte mesurée aux conditions d'utilisation telles que définies par la norme E.T.R.T.O. pour le pneu neuf.

5. Pneu selon l'une quelconque des revendications 1 à 4 **caractérisé en ce que** chaque rainure ondulante (5) est délimitée par des parois formées dans un matériau différent du matériau formant la bande.

6. Pneu selon la revendication 3 **caractérisé en ce que** chaque insert (4') est entouré par un matériau différent du matériau formant la bande de roulement, ce matériau étant destiné à rester lié à la bande de roulement après élimination de l'insert.

**7.** Pneu selon la revendication 3 **caractérisé en ce que** chaque insert (4') se présente sous la forme d'un tube creux.

**8.** Pneu selon la revendication 7 **caractérisé en ce que** chaque tube creux est formé dans un matériau élastomérique, ce tube étant pourvu d'un moyen pour maintenir pendant le moulage une pression à l'intérieur dudit tube.

**9.** Procédé d'obtention d'une bande de roulement (2) comprenant au moins une cavité ou rainure ondulante continue (5), ce procédé d'obtention comprenant les étapes suivantes :

- préparation d'une bande de gomme non vulcanisée,
- incorporation dans cette bande de gomme d'au moins un insert (4, 4', 4") suivant une géométrie ondulante au moins dans la profondeur de la bande,
- moulage et vulcanisation de la bande,
- enlèvement au moins partiel de chaque insert (4, 4', 4") pour former au moins une cavité ou rainure ondulante continue (5).

**10.** Procédé d'obtention d'une bande de roulement (2) selon la revendication 9 **caractérisé en ce que** l'incorporation, d'au moins un insert (4, 4', 4") suivant une géométrie ondulante au moins dans la profondeur de la bande, se fait grâce à l'utilisation d'une extrudeuse pourvue de moyen apte à positionner chaque insert (4, 4', 4") de façon appropriée dans l'épaisseur de la bande.

**Patentansprüche**

**1.** Reifen für einen Schwerlastwagen, welcher einen Laufstreifen (2) mit einer Gesamtdicke E und einem Gesamtvolumen V aufweist, wobei dieser Laufstreifen eine Lauffläche (200) aufweist, die dazu bestimmt ist, mit einer Fahrbahn in Kontakt zu kommen, wobei dieser Laufstreifen aufweist:

- wenigstens ein Hohlraum oder eine Rille (5), der bzw. die in einer Hauptrichtung durchgehend ist, wobei dieser Hohlraum oder diese Rille (5) durch Seitenwände (54) begrenzt ist, die durch einen Boden (53) verbunden sind, wobei dieser Hohlraum oder diese Rille einen Querschnitt aufweist, wobei die am weitesten innen befindlichen Punkte des Bodens (53) jedes Hohlraums eine Bodenlinie (530) definieren,
- wobei sich die Punkte der Bodenlinie (530) des Hohlraums oder der Rille zwischen einem minimalen Abstand Dm und einem maximalen Abstand DM befinden, wobei diese Abstände, gemessen auf dem Laufstreifen im neuen Zustand in Bezug auf die Lauffläche, höchstens gleich der Dicke E des Laufstreifens sind,
- wobei die Bodenlinie (530) jedes Hohlraums oder jeder Rille einer wellenförmigen Geometrie folgt, mit einer positiven Amplitude (A), die gleich der Differenz(DM-Dm) ist, und mit einer Wellenlänge ($\lambda$), die kleiner als die mittlere Aufstandslänge ist, gemessen unter solchen Einsatzbedingungen, wie sie durch die ETRTO-Norm für den neuen Reifen definiert sind,

wobei dieser Laufstreifen **dadurch gekennzeichnet ist, dass**:

- jeder Hohlraum oder jede Rille mehrere offene Abschnitte (51) auf der Lauffläche im neuen Zustand und mehrere geschlossene Abschnitte (52) aufweist, wobei die geschlossenen Abschnitte, die mit den offenen Abschnitten verbunden sind, abwechselnd angeordnet sind, wobei jeder geschlossene Abschnitt von der Lauffläche durch eine Gummibrücke beabstandet ist,
- die Gummibrücke, die zwischen jedem geschlossenen Abschnitt (52) und der Lauffläche (200) ausgebildet ist, durchgehend ist.

**2.** Reifen nach Anspruch 1, **dadurch gekennzeichnet, dass** der minimale Abstand Dm zwischen der Bodenlinie (530) der wellenförmigen Rillen und der Lauffläche wenigstens 25 % der Dicke E des Laufstreifens beträgt.

**3.** Reifen nach einem der Ansprüche 1 oder 2, **dadurch gekennzeichnet, dass** sein Laufstreifen wenigstens einen Einsatz (4, 4', 4") aufweist, der dazu bestimmt ist, einen durchgehenden Hohlraum entlang einer Hauptrichtung zu bilden, wobei dieser Hohlraum durch Seitenwände begrenzt ist, die durch einen Boden verbunden sind, wobei die am weitesten innen befindlichen Punkte des Bodens dieses Hohlraums eine wellenförmige Bodenlinie definieren, wobei dieser Einsatz (4, 4', 4") in dem Laufstreifen derart angeordnet ist, dass er erst nach einem teilweisen Verschleiß des Laufstreifens auf der Lauffläche des Laufstreifens erscheint.

4. Reifen nach Anspruch 3, **dadurch gekennzeichnet, dass** die Bodenlinie des Hohlraums, die einen Einsatz (4, 4', 4") aufweist, einer wellenförmigen Geometrie mit einer Wellenlänge folgt, die kleiner als die mittlere Aufstandslänge ist, gemessen unter solchen Einsatzbedingungen, wie sie durch die ETRTO-Norm für den neuen Reifen definiert sind.

5. Reifen nach einem der Ansprüche 1 bis 4, **dadurch gekennzeichnet, dass** jede wellenförmige Rille (5) durch Wände begrenzt ist, die aus einem Material ausgebildet sind, das von dem den Laufstreifen bildenden Material verschieden ist.

6. Reifen nach Anspruch 3, **dadurch gekennzeichnet, dass** jeder Einsatz (4') von einem Material umgeben ist, das von dem den Laufstreifen bildenden Material verschieden ist, wobei dieses Material dazu bestimmt ist, nach Entfernung des Einsatzes an den Laufstreifen gebunden zu bleiben.

7. Reifen nach Anspruch 3, **dadurch gekennzeichnet, dass** jeder Einsatz (4') die Form eines Hohlrohres aufweist.

8. Reifen nach Anspruch 7, **dadurch gekennzeichnet, dass** jedes Hohlrohr aus einem elastomeren Material ausgebildet ist, wobei dieses Rohr mit einem Mittel versehen ist, um während des Formens einen Druck im Inneren des Rohres aufrechtzuerhalten.

9. Verfahren zur Herstellung eines Laufstreifens (2), der wenigstens einen durchgehenden wellenförmigen Hohlraum oder eine durchgehende wellenförmige Rille (5) aufweist, wobei dieses Herstellungsverfahren die folgenden Schritte aufweist:

   - Herstellung eines Streifens aus nichtvulkanisiertem Gummi,
   - Einarbeitung, in diesen Gummistreifen, wenigstens eines Einsatzes (4, 4', 4"), der wenigstens in der Tiefe des Streifens einer wellenförmigen Geometrie folgt,
   - Formen und Vulkanisierung des Streifens,
   - wenigstens teilweise Entfernung jedes Einsatzes (4, 4', 4"), um wenigstens einen durchgehenden wellenförmigen Hohlraum oder wenigstens eine durchgehende wellenförmige Rille (5) zu bilden.

10. Verfahren zur Herstellung eines Laufstreifens (2) nach Anspruch 9, **dadurch gekennzeichnet, dass** die Einarbeitung wenigstens eines Einsatzes (4, 4', 4"), der wenigstens in der Tiefe des Streifens einer wellenförmigen Geometrie folgt, durch Verwendung eines Extruders erfolgt, der mit Mitteln versehen ist, die geeignet sind, jeden Einsatz (4, 4', 4") auf geeignete Weise in der Dicke des Streifens zu positionieren.

**Claims**

1. Tyre for a heavy goods vehicle comprising a tread (2) of total thickness E and total volume V, this tread having a tread surface (200) intended to come into contact with a roadway, this tread having:

   - at least one cavity or groove (5) that is continuous in a main direction, this cavity or groove (5) being delimited by side walls (54) connected by a bottom (53), this cavity or groove having a cross section, the points furthest towards the inside of the bottom (53) of each cavity defining a bottom line (530),
   - the points on the bottom line (530) of the said cavity or groove lying at distance between a minimum distance Dm and a maximum distance DM, these distances, which are measured on the tread in the new state with respect to the tread surface, being at most equal to the thickness E of the tread,
   - the bottom line (530) of each cavity or groove following a wavy geometry of positive amplitude A equal to the difference (DM-Dm) and along a wavelength $\lambda$ less than the mean length of the contact patch measured under the conditions of use as laid down in the E.T.R.T.O. standard for the new tyre,

   this tread being **characterized in that**:

   - each cavity or groove comprises a plurality of open sections (51) open onto the tread surface in the new state and a plurality of closed sections (52), the closed sections connected to the open sections being arranged in alternation, each closed section being spaced away from the tread surface by a bridge of rubber,

- the bridge of rubber formed between each closed section (52) and the tread surface (200) is continuous.

2. Tyre according to Claim 1, **characterized in that** the minimum distance Dm between the bottom line (530) of the wavy grooves and the tread surface is at least equal to 25% of the thickness E of the tread.

3. Tyre according to either one of Claims 1 or 2, **characterized in that** the tread comprises at least one insert (4, 4', 4") intended to form a cavity that is continuous in a main direction, this cavity being delimited by side walls connected by a bottom, the points furthest towards the inside of the bottom of this cavity defining a bottom line of wavy shape, this insert (4, 4', 4") being arranged in the tread in such a way as to appear on the tread surface only when the tread is part worn.

4. Tyre according to Claim 3, **characterized in that** the bottom line of the cavity comprising an insert (4, 4', 4") follows a wavy geometry having a wavelength less than the mean length of the contact patch measured under the conditions of use as laid down in the E.T.R.T.O. standard for the new tyre.

5. Tyre according to any one of Claims 1 to 4, **characterized in that** each wavy groove (5) is delimited by walls formed in a material which is different from the material of which the tread is made.

6. Tyre according to Claim 3, **characterized in that** each insert (4') is surrounded by a material that is different from the material of which the tread is made, this material being intended to remain connected to the tread after the insert has been eliminated.

7. Tyre according to Claim 3, **characterized in that** each insert (4') takes the form of a hollow tube.

8. Tyre according to Claim 7, **characterized in that** each hollow tube is formed from an elastomeric material, this tube being provided with a means for maintaining pressure inside the said tube during moulding.

9. Method of obtaining a tread (2) comprising at least one continuous wavy cavity or groove (5), this method comprising the following steps:

- preparing an unvulcanized band of rubber,
- incorporating into this band of rubber at least one insert (4, 4', 4") with a geometry which is wavy at least in the depth of the tread,
- moulding and vulcanizing the tread band,
- at least partially removing each insert (4, 4', 4") to form at least one continuous wavy cavity or groove (5).

10. Method of obtaining a tread (2) according to Claim 9, **characterized in that** the incorporation of at least one insert (4, 4', 4") in a geometry that is wavy at least in the depth of the tread, is done by using an extruder provided with a means capable of positioning each insert (4, 4', 4") appropriately within the thickness of the tread.

**FIG. 1**

**FIG. 2**     **FIG. 3**

Coupe II-II     Coupe III-III

**FIG. 4**

**FIG. 5**

**FIG. 6**

**FIG. 7**

**FIG. 8**

**FIG. 9**

**FIG. 10**

**EP 2 694 302 B1**

## RÉFÉRENCES CITÉES DANS LA DESCRIPTION

**Documents brevets cités dans la description**

- WO 03097384 A1